# EUROPEAN PATENT SPECIFICATION

(11) **EP 3 159 832 B1**
(45) Date of publication and mention of the grant of the patent: **05.08.2020**
(21) Application number: 15191281.3
(22) Date of filing: 23.10.2015
(51) Int. Cl.: G06K 19/077, G06K 19/07

(54) **AUTHENTICATION TOKEN**
AUTHENTIFIZIERUNGSTOKEN
JETON D'AUTHENTIFICATION

(43) Date of publication of application: 26.04.2017
(73) Proprietor: NXP B.V., 5656 AG Eindhoven (NL)
(72) Inventor: Suwald, Thomas, 5656 AG Eindhoven (NL)
(74) Representative: Krott, Michel

(56) References cited:
- EP-A1- 2 731 058
- WO-A2-02/33751
- DE-A1- 10 016 716
- DE-A1- 10 248 393
- DE-A1- 19 500 925
- DE-A1- 19 735 170
- GB-A- 2 279 610
- US-A- 5 598 032
- US-A- 5 800 763
- US-A- 6 050 494
- US-A- 6 151 511
- US-A1- 2005 045 729
- US-A1- 2005 231 921
- US-A1- 2006 072 355
- US-A1- 2009 199 004
- US-A1- 2010 264 211
- US-A1- 2011 074 001
- US-A1- 2012 181 333
- US-B2- 7 669 773

## Description

### FIELD

The present disclosure relates to an authentication token. Furthermore, the present disclosure relates to a corresponding method of manufacturing an authentication token.

### BACKGROUND

Today, authentication tokens such as smart cards are widely used in society. For example, smart cards may be used as electronic identity (eID) cards or bank cards, and may serve, among others, to authenticate the holder of said smart card to governmental or commercial institutions. That is to say, authentication tokens of this kind may be used for verifying the identity of a user in order to enable, for example, a payment transaction. Verifying the identity of a user is often done by requesting the user to input a personal identification number (PIN), which may subsequently be verified by a secure processing unit comprised in the token. There may be a need for an authentication token which is easy to produce. Furthermore, there may be a need for an authentication token which is secure, yet easy to use.

EP 2 731 058 A1 describes a set of conductive tracks on an insulating support, i.e. a lead pasted frame, that is provided with a perforation facing a contact pad. An integrated circuit chip is fixed on a module using a conducting adhesive. The adhesive is allowed to extend in the perforation and to connect the contact pad with a surface of the chip. The perforation is manufactured with a dimension that is lower than a main surface of the chip, and the chip is transferred to the insulating support. A corresponding integrated circuit chip module is also described.

US 6,151,511 describes an adapter for a cellular telephone apparatus arranged to operate with microprocessor subscriber identification cards having a plug-in format in cellular telephone apparatus and arranged to operate with microprocessor subscriber identification cards having a credit card format. The adapter comprises a first area for the insertion of the plug-in card and a second area for the connection of the adapter with the cellular telephone apparatus, the first and second areas being spatially separated from each other and electrically connected, so that the signals coming from the first insertion area are brought to the second connection area.

US 5,598,032 describes a contact-free card and a method for the manufacture of such a card. The card comprises a card body, an electronic module having an integrated chip card and two contact zones, and an antenna connected to the contact zones of said module by two contact terminals, wherein said module furthermore has contact pads connected to said chip for a contact-using operation of said card. Said method has a step according to which a layer of the card body is negative-molded on the antenna and a cavity is made in the card body, revealing said contact terminals of the antenna, followed by a step according to which the electronic module is mounted in the cavity of the card body.

DE 100 16 716 describes that for contactless use of a card, a card user has to specifically indicate a desire to debit money from the card. The card user touches contact surfaces of a contact field. A card microcontroller detects if the user has a finger on the contact surfaces using an impedance measurement between connections, and the level of impedance indicates if the skin surface of the finger is on the contact surface. A measured value is compared with a reference value and allows or disallows service use accordingly. A switch allows or blocks a service function according to a comparison of impedances.

US 5,800,763 describes that the card body of a data carrier with elements disposed therein, for example an electronic module, is produced from a pressed molding compound in a pressing apparatus. The elements to be embedded in the card body are preferably incorporated in the pressing apparatus and positioned and fixed there before the pressing operation.

DE 195 00 925 A1 describes an IC card having a transmission module built into a body as a separate unit. The module is equipped with an antenna. The antenna has at least one coil, for transmitting energy and data inductively. Alternatively there is at least one electrical conducting layer, for transmitting energy and data capacitively. The module has also contact surfaces to couple the "chip" module with an IC package and contact surfaces for coupling. There is a support layer for the antenna.

US 2006/0072355 A1 describes an electrostatic capacitance detection device for detecting electrostatic capacitance that changes in accordance with a distance from a target object to read surface contours of the target object, including electrostatic capacitance detection elements arranged in M rows and N columns, a power supply line supplying power to the electrostatic capacitance detection elements, an output line outputting a signal from the electrostatic capacitance detection elements, M row lines selecting the electrostatic capacitance detection elements disposed on a specific row, and N column lines selecting the electrostatic capacitance detection elements disposed on a specific column.

US 2010/0264211 A1 describes a system and method for using magnetically coupled antennas to enhance receptivity and/or reading range of radio frequency (RF) transaction devices. In some implementations, a method for boosting RF signals includes wirelessly receiving an RF signal from a transaction terminal at a passive antenna. The passive antenna is magnetically coupled to the antenna of a transaction card. The transaction card is inserted in a mobile host device and configured to execute a payment application using user credentials in response to at least a transaction request and transmits at least one transaction response to the transaction terminal based, at least in part, on the executed transaction application and using the antenna either standalone or through the coupled antenna configuration. The RF signal is transmitted to the transaction card using the inductive coupling with the terminal.

### SUMMARY

The invention is defined by the independent claims.

Preferred embodiments are set out in the dependent claims.

### DESCRIPTION OF DRAWINGS

Embodiments will be described in more detail with reference to the appended drawings, in which:
- Fig. 1: shows an illustrative embodiment of an authentication token;
- Fig. 2: shows an illustrative embodiment of a dual-interface smart card;
- Fig. 3: shows an illustrative embodiment of an authentication module;
- Fig. 4: shows an illustrative embodiment of an interface module;
- Fig. 5: shows an illustrative embodiment of a wire-embedding process;
- Fig. 6: shows an illustrative embodiment of wire endings;
- Fig. 7: shows an illustrative embodiment of a module interconnection layer;
- Fig. 8: shows an illustrative embodiment of a card layer stack;
- Fig. 9: shows an illustrative embodiment of a cavity creation process;
- Fig. 10: shows an illustrative embodiment of an insulation removal process;
- Fig. 11: shows a top view of a smart card prior to assembly;
- Fig. 12: shows a cross-section view of an assembled smart card.

### DESCRIPTION OF EMBODIMENTS

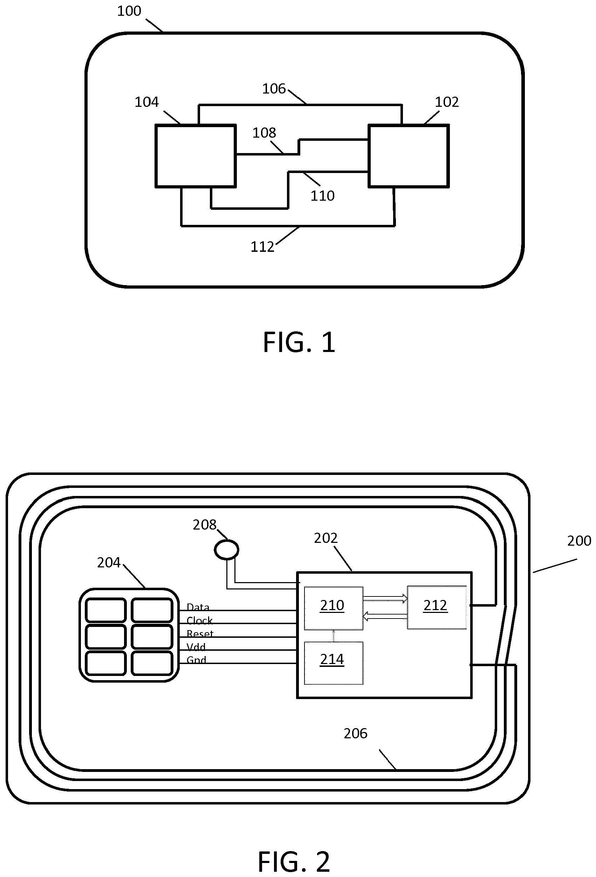

**Fig. 1** shows an illustrative embodiment of an authentication token 100. The authentication token 100 may, for example, be a smart card having an ID-1 form factor as defined in the technical standard ISO/IEC 7810 (credit-card size). In accordance with the present disclosure, the authentication token 100 comprises an authentication module 102 and at least one conductive wire for operatively connecting the authentication module to at least one further module of the token, said at least one conductive wire being embedded in a non-conductive substrate of said token 100. In this example, the token 100 comprises four conductive wires 106, 108, 110, 112, and the authentication module 102 is operatively connected to an interface module 104 of said token 100 by means of said conductive wires 106, 108, 110, 112. Embedding conductive wires 106, 108, 110, 112 in a non-conductive substrate of the token 100 may result in a token 100 which is easy to produce, because module interconnects may be formed in material layers which are often present in authentication tokens of the kind set forth, without creating a separate interconnection layer. Consequently, the token 100 may be manufactured at lower cost. For example, in case the token 100 is a smart card, the non-conductive substrate may be one of the card material layers of the smart card. After embedding the conductive wires 106, 108, 110, 112 into said non-conductive substrate, the modules 102, 104 may easily be assembled on the token 100.

**Fig. 2** shows an illustrative embodiment of a dual-interface smart card 200. The smart card 200 comprises a contact-bound interface and a contactless interface. The contact-bound interface enables the smart card 200 to communicate with devices in which the card 200 is physically inserted, such as automated teller machines (ATMs) and conventional payment terminals. The contactless interface enables the smart card 200 to communicate with contactless payment terminals. In this example, the contact-bound interface is implemented as a contact-based interface unit 204 conforming to the technical standard ISO/IEC 7816. Furthermore, the contactless interface is implemented as a loop antenna 206. An authentication module, implemented as a fingerprint verification module 202, is operatively connected to the contact-based interface unit 204 and the loop antenna 206. In accordance with the present disclosure, the fingerprint verification module 202 may be connected to the contact-based interface unit 204 through conductive wires embedded in a non-conductive substrate of the smart card 200 (as shown in Fig. 1). For example, the conductive wires may implement Data, Clock, Reset, Vdd (voltage supply) and Gnd (ground) connections between the fingerprint verification module 202 and the contact-based interface unit 204. Optionally, the smart card 200 may contain a user feedback device 208, for example a light-emitting diode (LED). Furthermore, the fingerprint verification module 202 may comprise a processor 210 which is operatively connected to a fingerprint sensor 212. By enabling fingerprint sensing and processing functions in the authentication module, the token may be used for authorizing transactions in a relatively easy manner. For example, it may be envisaged that the fingerprint sensor 212 captures a user's fingerprint, that the processor 210 performs an on-card matching function to verify whether the captured fingerprint matches a fingerprint template, and that, upon a positive verification, the fingerprint verification module 202 sends an authorization signal to an external device through the contact-based interface unit 204 or the loop antenna 206. Thus, a secure, yet easy to use, transaction authorization mechanism is implemented on the token. Optionally, the fingerprint verification module 202 may comprise a secure element 214 which is operatively connected to the processor 210. The secure element 214 may provide a secure environment for performing a fingerprint matching function. The secure element 214 may be implemented as an embedded chip, more specifically as a tamper-resistant integrated circuit with installed or pre-installed applications which have a prescribed functionality and a prescribed level of security. Furthermore, the secure element 214 may implement security functions, such as cryptographic functions.

As mentioned above, in one or more embodiments, the token comprises an interface module which is operatively connected to the authentication module through the at least one conductive wire. In the example shown in Fig. 2, the interface module is a contact-based interface unit 204 conforming to the standard ISO/IEC 7816. The use of such an interface module enables compatibility with external conventional transaction devices, such as ATMs. In particular, the authentication module may send authorization signals to such conventional transaction devices through the interface module, using a conductive wire of the kind set forth as an internal transmission line to the interface module.
Furthermore, in one or more embodiments, the non-conductive substrate is a thermoplastic substrate. Thermoplastic substrates are often used as basic constituents of an authentication token; embedding the conductive wires into a thermoplastic substrate may thus enable that one of the token's basic constituents is used as a module interconnection layer. Thus, an additional interconnection layer may be dispensed with and the resulting token may become thinner and may be produced at lower cost. In more specific embodiments, the thermoplastic substrate is an inlay substrate. Embedding the conductive wires in an inlay substrate is particularly useful if the token is a smart card. Smart card inlays may be produced in large volumes before functional modules are assembled on them. By assembling modules on inlays having embedded module interconnects the modules will already become connected upon assembly and no additional manufacturing steps for establishing connectivity between the modules are required. Thus, it may become easier to produce the smart card. It is noted that the body of the smart card may be made from a stack of lamination material layers. One of these lamination material layers may be adapted for use as the module interconnection layer. Furthermore, in one or more embodiments, the authentication module is integrally formed as a single component. Thus, referring to the example shown in Fig. 2, the fingerprint sensor 212, the processor 210 and the secure element 214 may be integrally formed as a single component. More specifically, the fingerprint sensor 212, the processor 210 and the secure element 214 may be separate ICs which are integrated in a module-package. In this way, the authentication module has a minimal amount of external interfaces and may therefore be easily assembled on a smart card inlay utilizing automated placement facilities.

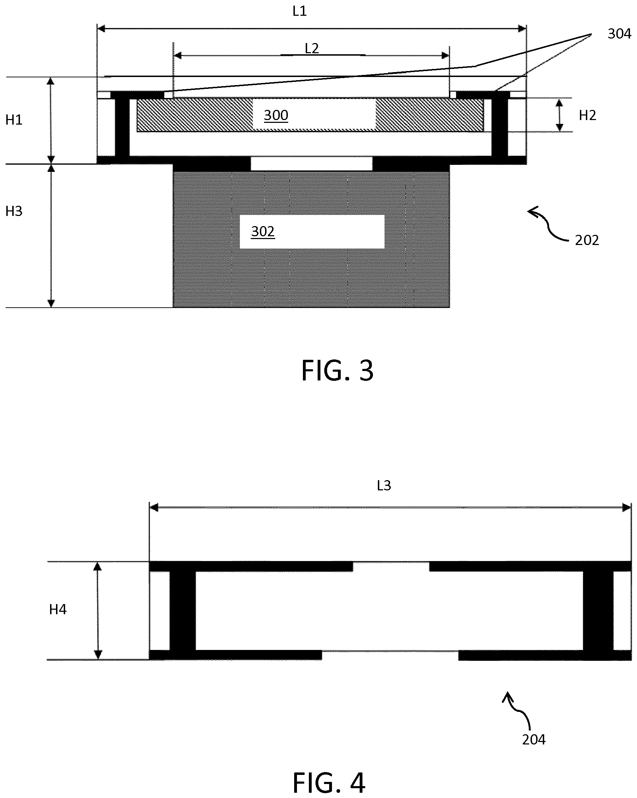

**Fig. 3** shows an illustrative embodiment of an authentication module. In particular, it shows an example implementation of the fingerprint verification module 202 shown in Fig. 2. The fingerprint verification module 202 comprises a fingerprint area sensor 300 which is connected to a processing block 302 through a galvanic interconnect 304. The processing block 302 may contain the processor 210 and the secure element 214, for example. In addition, the processing block may contain a power management unit (not shown). Suitable dimensions of the fingerprint verification module 202 are: H1 = 200 µm, H2 = 100 µm, H3 = 400 µm, L1 = 14 mm, L2 = 10 mm. The skilled person will appreciate that other dimensions may also be possible. In this example, the fingerprint verification module 202 is configured as a T-shaped module. The fingerprint area sensor 300 may be inserted into a cavity in a substrate material, such as polyimide or FR-4, with its contact pads facing up. The sensor's contact pads may be covered by copper. The substrate may have conductive tracks placed on both sides of the substrate. A galvanic process as used for PCB manufacturing may be used to create a solid conductive connection between the sensor's contact pads and the conductive tracks on the substrate's surface. VIAs (through-hole connections) may be used to establish a conductive connection between the conductive tracks on both sides of the substrate. On the lower side the substrate may have contact pads that may be used to establish a conductive connection to the conductive wires (not shown) embedded in a non-conductive substrate of the kind set forth.

**Fig. 4** shows an illustrative embodiment of an interface module. In particular, it shows an example implementation of the contact-based interface unit 204 shown in Fig. 2. In this example, contact-based interface unit 204 is configured as a brick-type module. On its top side ISO contact pad areas may be arranged (i.e. contact pads providing connectivity to an external device, e.g. an ATM). VIAs may be used to connect these contact pad areas to conductive tracks on the lower side of a substrate material. On the lower side the substrate may have contact pads that may be used to establish a conductive connection to the conductive wires (not shown) embedded in a non-conductive substrate of the kind set forth. Suitable dimensions of the contact-based interface unit 204 are: H4 = 200 µm, L3 = 14mm. The skilled person will appreciate that other dimensions may also be possible.

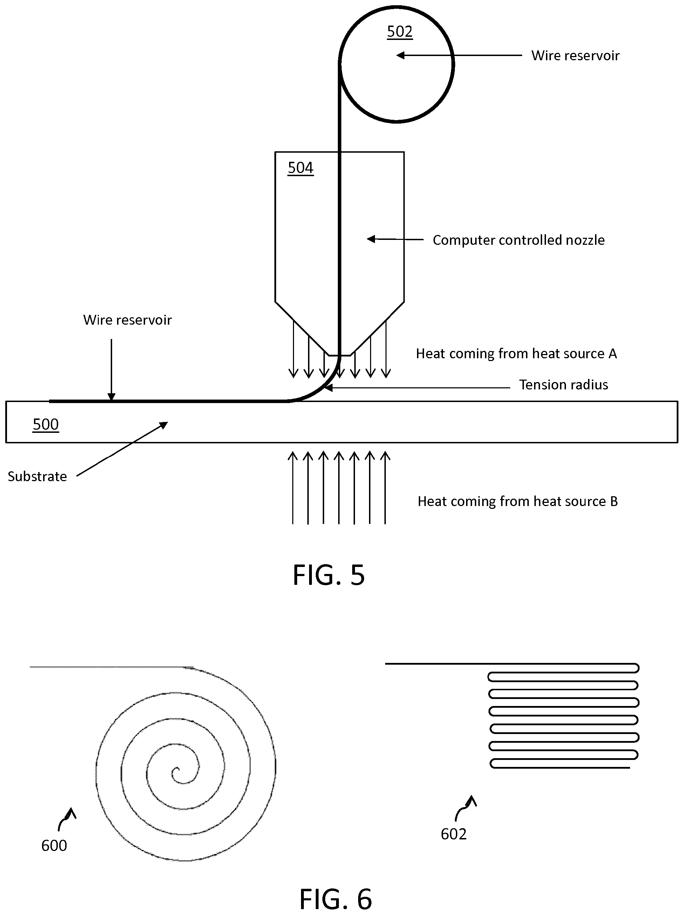

**Fig. 5** shows an illustrative embodiment of a wire-embedding process. The wire-embedding process comprises embedding wire from a wire reservoir 502 into a non-conductive substrate 500 through a computer-controlled nozzle 504. In particular, the wire may be copper wire that is supplied from the wire reservoir 502 though the nozzle 504 under application of heat and force to the substrate 500. The substrate 500 may be a thermoplastic card material, such as polyvinyl chloride (PVC) or polyethylene terephthalate (PET), which may facilitate the embedding process. The position and movement of the nozzle may be controlled by a computer in the three-dimensional space. The heat may be applied, for example, by inductive heating, ultrasonic heating, focused infrared light heating or electro-resistive heating. The heat may be applied from the wire-application side but also from underneath the substrate 500 in order to reduce the amount of heat required for softening the substrate material. The wire radius (tension radius) that develops during application of the wire is used to forward the force from the nozzle 504 to the wire and to the substrate 500 in order to facilitate embedding the wire into the substrate 500. In case the wires are insulated wires, the wire insulation should be resistant against the applied heat.

**Fig. 6** shows illustrative embodiments of wire endings. In particular, a wire ending 600 having a spiral pattern is shown, as well as a wire ending 602 having a meander pattern. Wire endings having a spiral pattern or a meander pattern facilitate connecting the conductive wires to the functional modules upon assembly, and may provide a good connection within a limited interface area. However, the skilled person will appreciate that other patterns may also be used for the wire endings. The endings may conveniently be prepared for connection to the functional modules by carrying out a milling process.

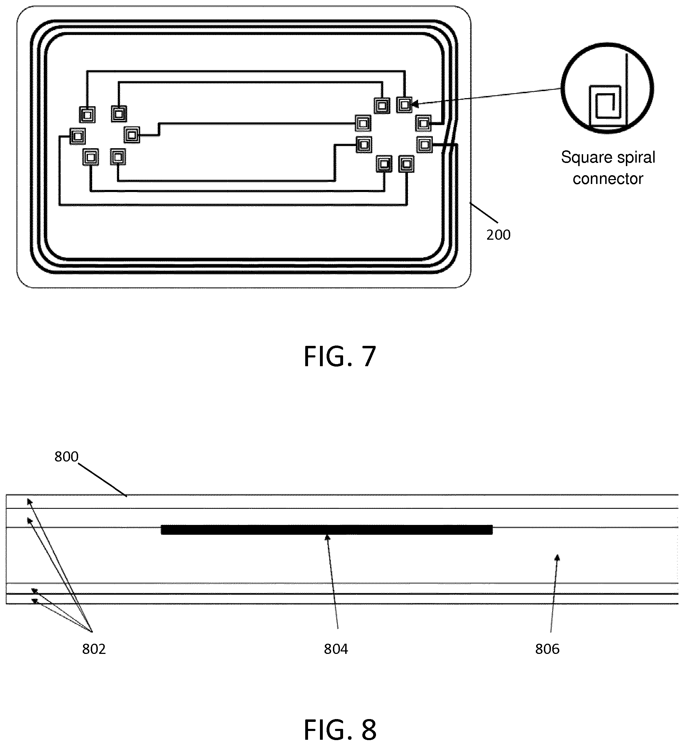

**Fig. 7** shows an illustrative embodiment of a module interconnection layer of a smart card 200. The module interconnection layer comprises a non-conductive substrate in which conductive wires have been embedded. In this example, the conductive wires have endings of a square spiral form. Furthermore, the module interconnection layer contains a loop antenna which also has endings of a square spiral form. The conductive wires may thus be embedded into the same non-conductive substrate as the antenna, which may enable a low-cost implementation of the smart card 200. Furthermore, the conductive wire may be made of the same material as the antenna, which may further lower the cost. In one or more embodiments, the conductive wire is an insulated conductive wire. Using insulated conductive wires in the module interconnection layer enables track crossings without causing short-circuits, which may provide more flexibility to the design of the module interconnects.

**Fig. 8** shows an illustrative embodiment of a card layer stack. As mentioned above, the body of the smart card may be made from a stack of lamination material layers 802, 806. One layer 806 of these lamination material layers may be adapted for use as the non-conductive substrate in which the conductive wire 804 is embedded. The module interconnection layer 806 which is formed thereby may be arranged with other card material layers 802 to form a card layer stack 800. The resulting card layer stack 800 is laminated in a card lamination press by applying temperature that may be above the melting temperature of the card material combined with mechanical pressure. In case of polycarbonate card material the temperature may be 200°C and the pressure may be 5 bar (i.e., 500 kPa) applied during 20 minutes. The lamination may result in a strong linkage between the layers of the card layer stack 800 such that a solid card body may be formed.

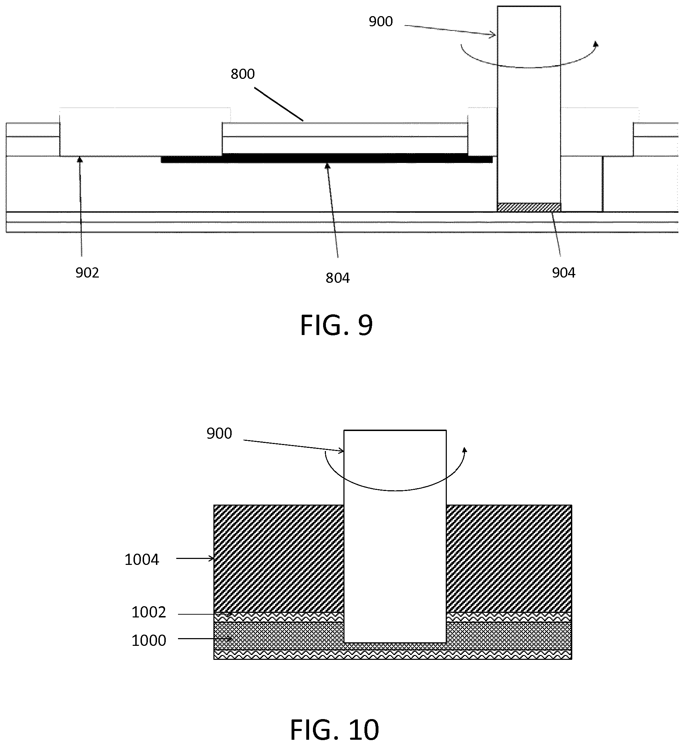

**Fig. 9** shows an illustrative embodiment of a cavity creation process. After card lamination cavities may be milled into the card body, in which subsequently the interface module and the authentication module may be inserted. For the interface module, a milling tool 900 may mill a box-shaped cavity 902. For the authentication module, the milling tool 900 may mill a T-shaped cavity 904.

**Fig. 10** shows an illustrative embodiment of an insulation removal process. In order to prepare endings of insulated conductive wires for connection to contact pads of the modules, the insulation of said wires should be removed. In order to achieve this, a milling process may be used. The milling process comprises milling, by a milling tool 900, an opening into a card body 1004, into an insulation layer 1002 of a wire 1000 and into a part of said wire 100. The milling process may partly remove the insulation of the wire in order to form an ending of the kind set forth.

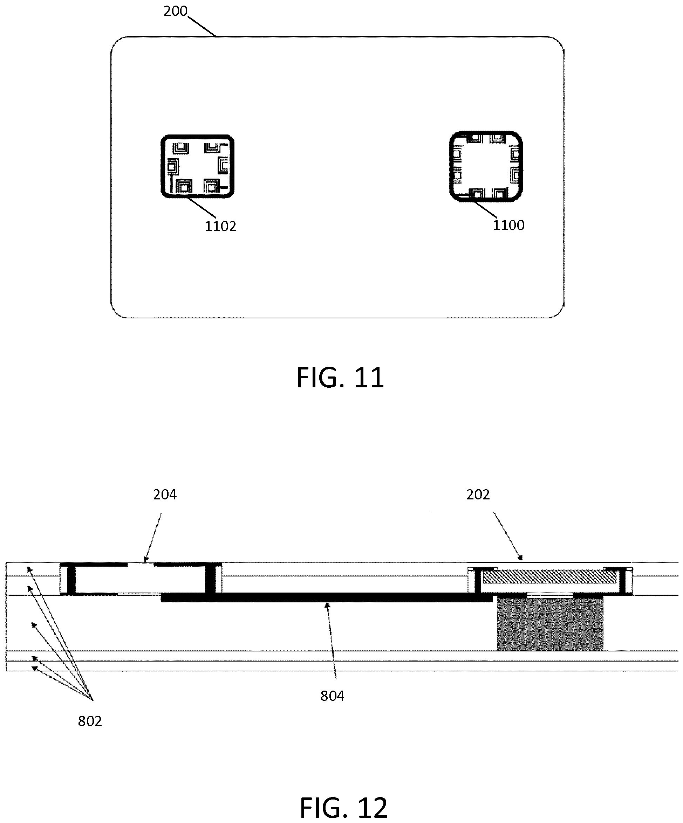

**Fig. 11** shows a top view of a smart card prior to assembly. The smart card 200 comprises a first cavity 1100 for accommodating an authentication module and a second cavity 1102 for accommodating an interface module. In some embodiments, no interface module may need to be assembled and the authentication module is only connected to the two wire endings of the loop antenna. This may be useful for contactless electronic documents such as electronic identification (eID) cards, because they may only require a contactless communication interface and consequently the cost of the contact-based interface unit may be saved.

**Fig. 12** shows a cross-section view of an assembled smart card. The assembled smart card comprises the card material layers 802. As mentioned above, at least one conductive wire 804 may be embedded in one of these layers 802. That is to say, one of these layers 802 serves as the non-conductive substrate in accordance with the present disclosure. In a manufacturing process, the wire structure or structures may be formed first, then the card may be laminated, then an opening may be milled for inserting the functional modules 202, 204 into the card, and finally the functional modules 202, 204 may be inserted (i.e. assembled) into the card. Thus, the milling process may serve the purposes of creating a cavity for accommodating said modules 202, 204 and also for partially removing the insulation from the wire endings in order to prepare them for connection processes such as soldering and gluing. In case of soldering with, e.g., low-temperature Sn-Bi solder the required heat may be applied from the contact-pad side through the modules 202, 204. Another assembly process may apply anisotropic conductive film or glue to the modules 202, 204 before inserting them into the milled cavities. Yet another assembly process may apply isotropic glue in combination with, e.g., epoxy-based glue that provides a stable fix of the modules 202, 204 to the card body. In this case the glue is activated by applying heat to the contact-pad side, e.g., through heat available in a lamination process or by a focused infrared beam.

### LIST OF REFERENCE SIGNS

- 100: authentication token
- 102: authentication module
- 104: interface module
- 106: conductive wire
- 108: conductive wire
- 110: conductive wire
- 112: conductive wire
- 200: smart card
- 202: fingerprint verification module
- 204: contact-based interface unit
- 206: loop antenna
- 208: user feedback device
- 210: processor
- 212: fingerprint sensor
- 214: secure element
- 300: fingerprint area sensor
- 302: processing block
- 304: galvanic interconnect
- 500: non-conductive substrate
- 502: wire reservoir
- 504: computer-controlled nozzle
- 600: wire ending
- 602: wire ending
- 800: card layer stack
- 802: card material layers
- 804: conductive wire
- 806: non-conductive substrate
- 900: milling tool
- 902: box-shaped cavity
- 904: T-shaped cavity
- 1000: conductive wire
- 1002: insulation
- 1004: card body
- 1100: cavity
- 1102: cavity

## Claims

1. An authentication token (100) being a smart card (200), the token (100) comprising an authentication module (102, 202) and at least one conductive wire (106, 108, 110, 112) for operatively connecting the authentication module (102, 202) to at least one further module (104, 204) of the token, said at least one conductive wire (106, 108, 110, 112) being embedded in a non-conductive substrate (500) of said token (100), wherein the token (100) further comprises an antenna (206) embedded in the non-conductive substrate (500);
**characterized in that** the conductive wire (106, 108, 110, 112) has at least one ending (600, 602) that has a meander form or a spiral form and that serves as a contact pad for connecting the authentication module (102, 202) or the further module (104, 204) to said conductive wire, wherein said ending (600, 602) has been prepared for connection to the authentication module (102, 202) or the further module (104, 204) by carrying out a milling process.

2. A token (100) as claimed in claim 1, wherein the authentication module (102, 202) comprises a fingerprint sensor (212) and a processing unit (210) which are operatively connected to each other.

3. A token (100) as claimed in claim 2, wherein the authentication module (102, 202) further comprises a secure element (214) which is operatively connected to the processing unit (210).

4. A token (100) as claimed in any preceding claim, wherein the non-conductive substrate (500) is a thermoplastic substrate.

5. A token (100) as claimed in any preceding claim, wherein the authentication module (102, 202) is integrally formed as a single component.

6. A token (100) as claimed in claim 1, wherein the conductive wire (106, 108, 110, 112) is made of the same material as said antenna (206).

7. A method of manufacturing an authentication token (100) being a smart card (200), the method comprising providing the token (100) with an authentication module (102, 202) and with at least one conductive wire (106, 108, 110, 112) for operatively connecting the authentication module (102, 202) to at least one further module (104, 204) of the token (100), wherein said at least one conductive wire (106, 108, 110, 112) is embedded in a non-conductive substrate (500) of said token, the method further comprising embedding an antenna (206) in the non-conductive substrate (500);
**characterized in that** the conductive wire (106, 108, 110, 112) has at least one ending (600, 602) that has a meander form or a spiral form and that serves as a contact pad for connecting the authentication module (102, 202) or the further module (104, 204) to said conductive wire, wherein said ending (600, 602) is prepared for connection to the authentication module (102, 202) or the further module (104, 204) by carrying out a milling process.

## Patentansprüche

1. Authentifizierungstoken (100), das eine intelligente Karte (200) ist, das Token (100) ein Authentifizierungsmodul (102, 202) und mindestens einen leitfähigen Draht (106, 108, 110, 112) zum wirksamen Verbinden des Authentifizierungsmoduls (102, 202) mit mindestens einem weiteren Modul (104, 204) des Tokens umfassend, wobei der mindestens eine leitfähige Draht (106, 108, 110, 112) in einem nichtleitenden Substrat (500) des Tokens (100) eingebettet ist, wobei das Token (100) weiterhin eine Antenne (206) umfasst, die in dem nichtleitenden Substrat (500) eingebettet ist;
**dadurch gekennzeichnet, dass** der leitfähige Draht (106, 108, 110, 112) mindestens ein Ende (600, 602) aufweist, das eine Mäandergestalt oder eine Spiralgestalt aufweist und das als eine Kontaktfläche zum Verbinden des Authentifizierungsmoduls (102, 202) oder des weiteren Moduls (104, 204) mit dem leitfähigen Draht dient, wobei das Ende (600, 602) zur Verbindung mit dem Authentifizierungsmodul (102, 202) oder mit dem weiteren Modul (104, 204) durch Ausführen eines Fräsprozesses vorbereitet wurde.

2. Token (100) nach Anspruch 1, wobei das Authentifizierungsmodul (102, 202) einen Fingerabdrucksensor (212) und eine Verarbeitungseinheit (210) umfasst, die wirksam miteinander verbunden sind.

3. Token (100) nach Anspruch 2, wobei das Authentifizierungsmodul (102, 202) weiterhin ein sicheres Element (214) umfasst, das wirksam mit der Verarbeitungseinheit (210) verbunden ist.

4. Token (100) nach einem der vorhergehenden Ansprüche, wobei das nichtleitende Substrat (500) ein thermoplastisches Substrat ist.

5. Token (100) nach einem der vorhergehenden Ansprüche, wobei das Authentifizierungsmodul (102, 202) integral als eine einzelne Komponente ausgebildet ist.

6. Token (100) nach Anspruch 1, wobei der leitfähige Draht (106, 108, 110, 112) aus dem gleichen Material wie die Antenne (206) angefertigt ist.

7. Herstellungsverfahren für ein Authentifizierungstoken (100), das eine intelligente Karte (200) ist, das Verfahren Versehen des Tokens (100) mit einem Authentifizierungsmodul (102, 202) und mit mindestens einem leitfähigen Draht (106, 108, 110, 112) zum wirksamen Verbinden des Authentifizierungsmoduls (102, 202) mit mindestens einem weiteren Modul (104, 204) des Tokens (100) umfassend, wobei der mindestens eine leitfähige Draht (106, 108, 110, 112) in einem nichtleitenden Substrat (500) des Tokens eingebettet ist, wobei das Verfahren weiterhin Einbetten einer Antenne (206) in dem nichtleitenden Substrat (500) umfasst;
**dadurch gekennzeichnet, dass** der leitfähige Draht (106, 108, 110, 112) mindestens ein Ende (600, 602) aufweist, das eine Mäandergestalt oder eine Spiralgestalt aufweist und das als eine Kontaktfläche zum Verbinden des Authentifizierungsmoduls (102, 202) oder des weiteren Moduls (104, 204) mit dem leitfähigen Draht dient, wobei das Ende (600, 602) zur Verbindung mit dem Authentifizierungsmodul (102, 202) oder mit dem weiteren Modul (104, 204) durch Ausführen eines Fräsprozesses vorbereitet ist.

## Revendications

1. Jeton d'authentification (100) qui est une carte à puce (200), le jeton (100) comprenant un module d'authentification (102, 202) et au moins un fil conducteur (106, 108, 110, 112) destiné à connecter fonctionnellement le module d'authentification (102, 202) à au moins un autre module (104, 204) du jeton, ledit au moins un fil conducteur (106, 108, 110, 112) étant incorporé dans un substrat non conducteur (500) dudit jeton (100), le jeton (100) comprenant en outre une antenne (206) incorporée dans le substrat non conducteur (500) ;
**caractérisé en ce que** le fil conducteur (106, 108, 110, 112) a au moins une extrémité (600, 602) qui a une forme en méandre ou une forme en spirale et qui sert de plot de contact pour connecter le module d'authentification (102, 202) ou l'autre module (104, 204) audit fil conducteur, ladite extrémité (600, 602) ayant été préparée pour la connexion au module d'authentification (102, 202) ou à l'autre module (104, 204) en réalisant un procédé de fraisage.

2. Jeton (100) selon la revendication 1, dans lequel le module d'authentification (102, 202) comprend un capteur d'empreintes (212) et une unité de traitement (210) qui sont fonctionnellement connectés l'un à l'autre.

3. Jeton (100) selon la revendication 2, dans lequel le module d'authentification (102, 202) comprend en outre un élément sécurisé (214) qui est fonctionnellement connecté à l'unité de traitement (210).

4. Jeton (100) selon une quelconque revendication précédente, dans lequel le substrat non conducteur (500) est un substrat thermoplastique.

5. Jeton (100) selon une quelconque revendication précédente, dans lequel le module d'authentification (102, 202) est formé d'une seule pièce comme un seul composant.

6. Jeton (100) selon la revendication 1, dans lequel le fil conducteur (106, 108, 110, 112) est constitué du même matériau que ladite antenne (206).

7. Procédé de fabrication d'un jeton d'authentification (100) qui est une carte à puce (200), le procédé comprenant l'obtention du jeton (100) avec un module d'authentification (102, 202) et avec au moins un fil conducteur (106, 108, 110, 112) destiné à connecter fonctionnellement le module d'authentification (102, 202) à au moins un autre module (104, 204) du jeton (100), ledit au moins un fil conducteur (106, 108, 110, 112) étant incorporé dans un substrat non conducteur (500) dudit jeton, le procédé comprenant en outre l'incorporation d'une antenne (206) dans le substrat non conducteur (500) ;
**caractérisé en ce que** le fil conducteur (106, 108, 110, 112) a au moins une extrémité (600, 602) qui a une forme en méandre ou une forme en spirale et qui sert de plots de contact pour connecter le module d'authentification (102, 202) ou l'autre module (104, 204) audit fil conducteur, ladite extrémité (600, 602) étant préparée pour la connexion au module d'authentification (102, 202) ou à l'autre module (104, 204) en réalisant un procédé de fraisage.
